# FASCICULE DE BREVET EUROPEEN

(11) **EP 4 264 936 B1**
(45) Date de publication et mention de la délivrance du brevet: **28.01.2026**
(21) Numéro de dépôt: 21840544.7
(22) Date de dépôt: 16.12.2021
(51) Int. Cl.: H04N 23/74

(54) **DISPOSITIF D'ILLUMINATION ET DISPOSITIF D'IMAGERIE COMPORTANT UN TEL DISPOSITIF**
BELEUCHTUNGSVORRICHTUNG UND ABBILDUNGSVORRICHTUNG MIT SOLCH EINER BELEUCHTUNGSVORRICHTUNG
LIGHTING DEVICE AND IMAGING DEVICE COMPRISING SUCH A LIGHTING DEVICE

(30) Priorité: 17.12.2020 FR 2013410
(43) Date de publication de la demande: 25.10.2023
(73) Titulaire: Valeo Comfort and Driving Assistance, 94000 Créteil (FR)
(72) Inventeur: AUTRAN, Frederic, 94000 Créteil (FR)
(74) Mandataire: Delplanque, Arnaud
(86) Numéro de dépôt international: PCT/EP2021/086318
(87) Numéro de publication internationale: WO 2022/129419

(56) Documents cités:
- EP-A2- 3 258 746
- US-A1- 2017 307 164

## Description

### Domaine technique

La présente invention concerne le domaine technique de l'imagerie, et notamment de la capture d'image à l'aide d'un illuminateur.

L'invention concerne tout particulièrement un dispositif d'illumination et un dispositif d'imagerie comportant un tel dispositif, par exemple mais non limitativement adapté à la capture d'image dans l'habitacle d'un véhicule automobile.

### Arrière-plan technologique

Le terme imageur est entendu ici comme tout dispositif permettant de capturer des images qui sont soit des images bidimensionnelles, comme par exemple des photos ou des vidéos, soit des images tridimensionnelles telles que celles capturées par un imageur mettant en œuvre des techniques dites de mesure de temps de vol (« Time of Flight », en langue anglaise).

Il est connu de coupler un imageur à un dispositif d'illumination afin de maintenir une luminosité suffisante indépendamment de la luminosité ambiante, ou bien afin de générer des impulsions lumineuses nécessaires à la mise en œuvre des techniques de mesure de temps de vol.

Afin de ne pas perturber les personne présentes à proximité de l'imageur, il est connu d'utiliser des sources lumineuses infra-rouges qui émettent des faisceaux lumineux invisibles pour l'œil humain. Cependant, les sources infra-rouges pourraient dans certaines conditions présenter un risque pour l'œil humain dès lors que leur intensité devient trop élevée, à plus forte raison car elles ne déclenchent pas de réflexe de protection chez les personnes soumises à l'illumination infrarouge.

Classiquement, les sources lumineuses des dispositifs d'illumination pour imageurs, notamment les sources lumineuses infra-rouges, sont couplées à un diffuseur assurant la double fonction d'augmenter l'étalement angulaire et de réduire l'intensité lumineuse du faisceau lumineux émis par la source et traversant le diffuseur. Ainsi, dans les dispositifs d'illumination, il convient de configurer la source lumineuse pour qu'elle génère un faisceau lumineux ayant une intensité élevée afin de maintenir une intensité lumineuse suffisante en aval du diffuseur relativement à la direction de propagation du faisceau.

Un risque pour l'œil humain se présente dès lors que le diffuseur est défaillant, par exemple absent ou cassé.

Des solutions existantes pour répondre au risque de défaillance du diffuseur consistent à fixer solidement le diffuseur, par exemple à l'aide d'un châssis dédié, de le protéger à l'aide d'un boîtier, et/ou d'utiliser un détecteur de présence du diffuseur permettant de couper la source lumineuse en cas de non-détection du diffuseur.

Cependant, ces solutions ne permettent pas de prévenir certains types de dégâts subis par le diffuseur, comme les dégâts thermiques, par exemple une exposition à une très forte chaleur, qui peuvent altérer sa structure interne et donc ses fonctions de diffusion et de réduction de l'intensité lumineuse sans altérer sa structure externe.

En outre, de telles solutions nécessitent l'emploi de moyens encombrants, ce qui va à l'encontre de la tendance actuelle de miniaturisation des dispositifs d'imagerie.

Il existe donc un besoin d'un dispositif d'illumination peu encombrant et sans danger pour l'œil humain.

US2017/0307164 A1 divulgue un dispositif d'illumination intégré au sein d'un véhicule automobile. EP3258746 A2 divulgue la sécurisation d'un module lumineux comprenant une source laser.

### Résumé de l'invention

Selon un aspect, il est proposé un dispositif d'illumination comportant un module d'illumination comprenant une sortie optique configurée pour émettre un faisceau lumineux présentant un étalement angulaire, le module d'illumination comprenant une source lumineuse et un diffuseur optique, la source lumineuse étant configurée pour générer ledit faisceau lumineux, le diffuseur optique étant agencé pour recevoir le faisceau lumineux et pour le diffuser vers la sortie optique de façon que l'étalement angulaire présente, en aval du diffuseur par rapport au sens de propagation du faisceau lumineux, une valeur aval supérieure à une valeur amont de l'étalement angulaire en amont du diffuseur.

Selon une caractéristique générale de cet aspect, le dispositif comporte un module de contrôle configuré pour émettre un signal de contrôle présentant une valeur d'alarme lorsque la valeur de l'étalement angulaire du faisceau lumineux émis par la sortie optique passe sous un premier seuil prédéterminé, le module de contrôle comprenant un photorécepteur optiquement couplé à la sortie optique et configuré pour mesurer une intensité lumineuse, le module de contrôle étant configuré pour délivrer le signal de contrôle présentant la valeur d'alarme lorsque la valeur de l'intensité lumineuse est inférieure ou égale à un deuxième seuil prédéterminé, le dispositif comportant en outre un circuit de commande configuré pour désactiver la source lumineuse à la réception du signal de contrôle présentant la valeur d'alarme.

L'étalement angulaire d'un faisceau lumineux est entendu ici et dans la suite de la description comme l'angle de divergence du faisceau par rapport à son axe de propagation, c'est à dire ici par rapport à une direction normale au diffuseur.

Ainsi, en détectant une diminution de l'étalement angulaire du faisceau lumineux en sortie du diffuseur, on détecte une conséquence d'une défaillance du diffuseur indépendamment de la cause. La détection de la défaillance est donc fiable et le dispositif est ainsi plus sûr que ceux de l'art antérieur.

Selon l'invention, le module de contrôle comporte un guide d'onde qui présente une direction de propagation transversale au faisceau et qui est configuré pour coupler optiquement la sortie optique et le photorécepteur.

Ainsi, un étalement angulaire plus faible entraînera un angle d'incidence plus faible des rayons sur les parois du guide d'onde, et donc un nombre de réflexions plus élevé dans le guide d'onde. Les pertes dans le guide d'onde dues aux réflexions successives sont donc plus élevées et l'intensité lumineuse au niveau de l'entrée optique plus faible. Il est donc possible de détecter facilement et de façon fiable une défaillance du diffuseur. En outre, l'emploi d'un guide d'onde permet de maintenir une partie du module de contrôle éloigné du faisceau lumineux et donc d'éviter une obstruction trop importante du faisceau par le module de contrôle.

Selon l'invention, le dispositif comporte une vitre de protection configurée pour être traversée par le faisceau lumineux, le guide d'onde comportant au moins une portion de la vitre de protection. Le guide d'onde comporte par exemple deux parois opposées partiellement réfléchissantes de la vitre de protection. Il convient de noter qu'une défaillance de ladite portion de la vitre de protection est détectable par le dispositif.

Ainsi, on s'affranchit de l'utilisation d'un guide d'onde et d'une vitre de protections distinctes. Le dispositif est donc avantageusement moins encombrant. En outre, s'affranchir d'un guide d'onde distinct permet d'éviter une obstruction supplémentaire du faisceau par le guide d'onde.

Le circuit de commande peut être configuré pour délivrer un signal impulsionnel de commande présentant soit un premier état, soit un deuxième état, la source lumineuse étant configurée pour générer le faisceau lumineux lorsque le signal impulsionnel de commande présente le premier état et pour être désactivée lorsque le signal impulsionnel de commande présente le deuxième état.

Une commande impulsionnelle de la source lumineuse est particulièrement adaptée à la mise en œuvre de techniques de mesure de temps de vol.

Le photorécepteur peut comporter une borne de signal configurée pour délivrer un signal de mesure représentatif de l'intensité lumineuse, le module de contrôle comportant un comparateur comprenant une première entrée de comparateur électriquement couplée à la borne de signal, une deuxième entrée de comparateur configurée pour recevoir un signal de référence dont la valeur est représentative du deuxième seuil et une sortie de comparateur configurée pour délivrer le signal de contrôle présentant la valeur d'alarme si la valeur du signal sur la première entrée de comparateur est inférieure ou égale à la valeur du signal sur la deuxième entrée de comparateur.

La borne de signal peut être couplée à la première entrée de comparateur par l'intermédiaire d'un circuit mémoire configuré pour maintenir la valeur du signal de mesure entre deux présentations successives du premier état du signal impulsionnel de commande.

Ainsi, on exclut de la détection les valeurs du signal de mesure lorsque la source lumineuse ne génère pas le faisceau. La détection est ainsi plus précise et le dispositif plus fiable.

La borne de signal peut être couplée à la première entrée de comparateur par l'intermédiaire d'un soustracteur configuré pour délivrer à la première entrée de comparateur un signal différentiel dont la valeur est égale à la différence entre la valeur du signal de mesure lorsque le signal impulsionnel de commande présente le premier état et la valeur du signal de mesure lorsque le signal impulsionnel de commande présente le deuxième état.

On réalise donc une opération de filtrage temporel, permettant avantageusement d'exclure de la détection les composantes du signal représentatives de la lumière ambiante. Le dispositif est ainsi plus fiable.

Un filtre passe-bande peut être interposé entre le photorécepteur et la sortie optique.

Un filtre passe-bande optique est un moyen simple de réaliser le filtrage et de rendre le dispositif plus fiable.

Le module de contrôle peut comporter au moins une cloison opaque d'isolation le protégeant de la lumière ambiante.

La source lumineuse peut comporter au moins une diode laser à cavité verticale émettant par la surface.

Les diodes laser à cavité verticale émettant par la surface (communément désignées par l'homme du métier sous l'acronyme anglo-saxon VCSEL, pour « Vertical Cavity Surface Emitting Laser ») présentent une très faible dérive de température et permettent la génération d'un faisceau dans une bande de longueur d'onde très étroite ce qui, notamment lorsque le module de contrôle comporte un filtre passe-bande étroit, permet une bonne immunité à la lumière ambiante.

En outre, la capacité des diodes VCSEL à générer des impulsions courtes permet d'augmenter la puissance de crête des impulsions et donc d'augmenter le rapport signal à bruit, ce qui est notamment avantageux pour la mise en œuvre des méthodes de temps de vol.

Selon un autre aspect, il est proposé un système d'imagerie comportant un dispositif de capture d'image et un dispositif d'illumination selon l'invention.

Les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des figures

De plus, diverses autres caractéristiques de l'invention ressortent de la description annexée effectuée en référence aux dessins qui illustrent des formes, non limitatives, de réalisation de l'invention et où :
[Fig. 1] la figure 1 est une représentation schématique d'un point de vue structurel d'un dispositif d'illumination selon un mode de réalisation de l'invention,
[Fig. 2] la figure 2 est une représentation schématique du dispositif d'illumination de la figure 1 dans lequel le diffuseur du module d'illumination est défaillant,
[Fig. 3] la figure 3 est une représentation schématique d'un point de vue structurel du dispositif d'illumination selon un exemple de module de contrôle ne comportant pas de guide d'onde,
[Fig. 4] la figure 4 est une représentation schématique d'un point de vue structurel d'un système d'imagerie selon un mode de réalisation de l'invention,
[Fig. 5] la figure 5 est une représentation schématique d'un point de vue structurel d'une autre variante de réalisation du dispositif d'illumination selon l'invention dans lequel le module de contrôle est protégé par une cloison opaque,
[Fig. 6] la figure 6 est une représentation schématique d'un point de vue structurel d'une autre variante de réalisation du dispositif d'illumination selon l'invention dans lequel le module de contrôle comporte un filtre passe bande optique,
[Fig. 7] la figure 7 est une représentation schématique d'un point de vue électrique du dispositif d'illumination selon l'invention, et
[Fig. 8] la figure 8 est une représentation schématique d'un point de vue électrique du dispositif d'illumination selon un mode de réalisation de l'invention

Il est à noter que sur ces figures les éléments structurels et/ou fonctionnels communs aux différentes variantes peuvent présenter les mêmes références.

### Description détaillée

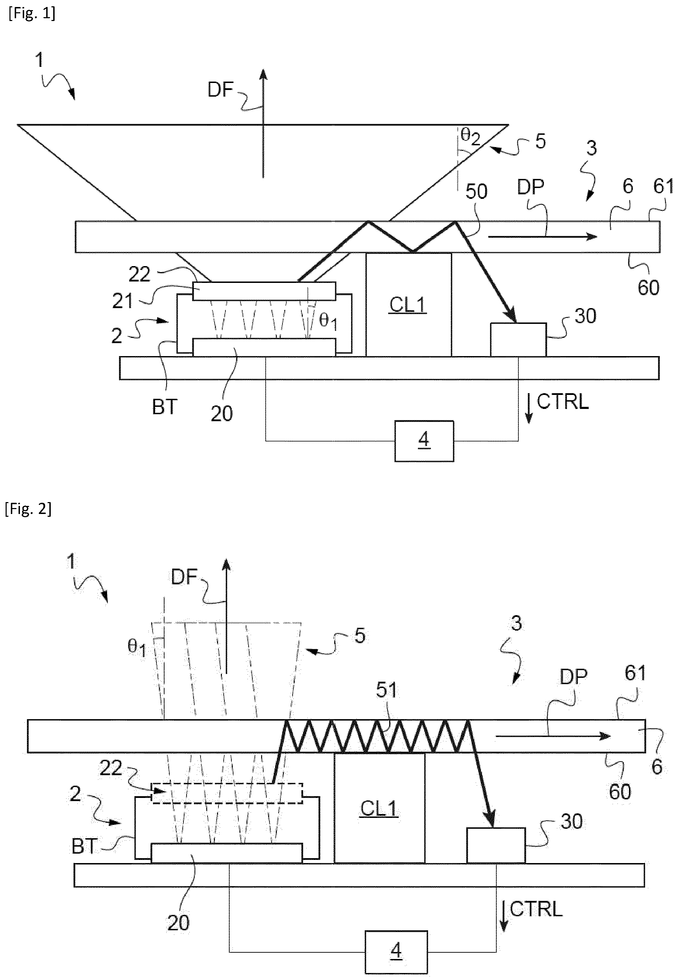

Un dispositif d'illumination selon l'invention, tel que représenté schématiquement sur la figure 1 et désigné dans son ensemble par la référence 1, comporte un module d'illumination 2, un module de contrôle 3 optiquement couplé au module d'illumination et un circuit de commande 4 électriquement couplé au module d'illumination 2 et au module de contrôle 3.

Le module d'illumination 2 comporte une sortie optique 22 configurée pour délivrer un faisceau lumineux 5, une source lumineuse 20 et un diffuseur 21. La source lumineuse 20 est configurée pour générer le faisceau lumineux 5 et le diffuseur 21 est agencé de façon à le recevoir et à le délivrer vers la sortie optique 22. Ces éléments du module d'illumination 2 sont dans cet exemple logés dans un boîtier BT.

Ici, le boîtier BT comporte un orifice dans lequel est logé le diffuseur 21. Ainsi la sortie optique 22 est formée par une face du diffuseur 21. En variante, le diffuseur pourrait être positionné en amont de la sortie optique relativement au sens de propagation du faisceau 5. Dans ce cas, l'orifice du boîtier BT ferait office de sortie optique.

Le diffuseur 21 est configuré pour augmenter la valeur de l'étalement angulaire du faisceau et pour en réduire l'intensité. Ainsi, en amont du diffuseur relativement à la direction de propagation du faisceau 5, le faisceau 5 présente un étalement angulaire ayant une valeur amont θ₁ ici égale à 10°. En aval du diffuseur, le faisceau lumineux 5 présente un étalement angulaire ayant une valeur aval θ₂ supérieure à la valeur amont θ₁, la valeur aval θ₂ étant ici égale à 50°.

La source lumineuse 20 se présente ici sous la forme d'une matrice de diodes électroluminescentes réalisée sur une carte de circuit imprimé. Les diodes électroluminescentes sont ici des diodes VCSEL configurée pour générer le faisceau 5 dans une bande spectrale comprise entre 800 nanomètres et 1000 nanomètres.

Le module de contrôle 3 est ici configuré pour transmettre au circuit de commande un signal de contrôle CTRL présentant soit une valeur neutre, par exemple un état bas, soit une valeur d'alarme, par exemple un état haut, et pour détecter une diminution anormale de l'étalement angulaire du faisceau lumineux 5, c'est-à-dire un passage sous un premier seuil prédéterminé de la valeur de l'étalement angulaire. En cas de détection, le module de contrôle 3 génère le signal de contrôle CTRL présentant la valeur d'alarme ; sinon, le module de contrôle 3 génère le signal de contrôle CTRL présentant la valeur neutre.

A cette fin, le module de contrôle 3 comporte un photorécepteur 30 optiquement couplé à la sortie optique 22 et configuré pour mesurer une intensité lumineuse. Le module de contrôle 3 est ici configuré pour générer le signal de contrôle présentant la valeur d'alarme lorsque la valeur de l'intensité lumineuse mesurée par le photorécepteur 30 franchit un deuxième seuil prédéterminé. Ici, la valeur du deuxième seuil prédéterminé d'intensité lumineuse est représentative de la valeur du premier seuil prédéterminé d'étalement angulaire, c'est-à-dire qu'elle est directement liée à cette valeur, comme il sera vu ci-après.

Dans ce mode de réalisation, le photorécepteur 30 est optiquement couplé à la sortie optique 22 par l'intermédiaire d'un guide d'onde 6 présentant une direction de propagation DP transversale au faisceau lumineux 5, et en particulier dans cette exemple une direction de propagation DP orthogonale à la direction de propagation DF du faisceau 5. Une première cloison opaque CL1 est ici située entre le photorécepteur 30 et le module d'illumination 2 de façon que le photorécepteur 30 soit optiquement couplé au module d'illumination 2 par l'intermédiaire du guide d'onde 6 uniquement.

Ici, le guide d'onde 6 est formé par une vitre de protection située en aval du module d'illumination 2 (sur le trajet du faisceau lumineux 5) de façon à être traversée par le faisceau 5. La vitre de protection s'étend également au-dessus du photorécepteur 30 de façon que le module d'illumination 2 et le photorécepteur 30 se situent d'un même côté de la vitre de protection et soient protégés par la vitre de protection.

Le guide d'onde 6 est formé par une première paroi partiellement réfléchissante 60 et par une deuxième paroi partiellement réfléchissante 61 qui délimitent la vitre de protection 6. Une partie des rayons du faisceau 5 qui ne traverse pas les parois partiellement réfléchissantes 60 et 61 est réfléchie successivement sur les parois 60 et 61 de façon à se propager selon la direction de propagation DP.

A titre d'exemple, le trajet d'un premier rayon périphérique 50 du faisceau 5 situé en périphérie du faisceau 5 est représenté. Le premier rayon périphérique 50 est guidé depuis la sortie optique 22 jusqu'au photorécepteur 30 au travers du guide d'onde 6. Le premier rayon périphérique 50 traverse donc deux fois la première paroi partiellement réfléchissante 60 mais ne traverse jamais totalement la deuxième paroi partiellement réfléchissante 61.

Il convient de noter ici que puisque les parois 60 et 61 sont partiellement réfléchissantes, chaque réflexion contre l'une ou l'autre des parois entraîne des pertes optiques au travers de la paroi correspondante, et réciproquement chaque franchissement de la paroi entraîne des pertes optiques par réflexion.

Et, puisque le premier rayon périphérique 50 est situé en bordure du faisceau 5, il présente un angle de divergence maximal par rapport à la direction de propagation du faisceau 5, et donc un angle d'incidence maximal sur les parois partiellement réfléchissantes 60 et 61. Ainsi, pour une distance donnée parcourue dans le guide d'onde 6, le premier rayon périphérique 50 subira moins de réflexions qu'un rayon lumineux présentant un angle de divergence plus faible par rapport à la direction de propagation du faisceau 5. Ici, le premier rayon périphérique 50 subit trois réflexions, dont une seule sur la première paroi périphérique 60.

Chaque réflexion sur les parois partiellement réfléchissante 60 et 61 entraînant des pertes optiques au travers desdites parois, l'intensité lumineuse mesurée par le photorécepteur 30 est proportionnelle au nombre de réflexions subies par le faisceau périphérique 50, et donc à l'étalement angulaire du faisceau 5. Ainsi, plus l'étalement angulaire du faisceau 5 est faible, plus l'intensité lumineuse mesurée par le photorécepteur 30 sera faible.

Ainsi, comme mentionné ci-avant, la valeur de l'intensité lumineuse mesurée est représentative de la valeur de l'étalement angulaire, et la valeur du deuxième seuil prédéterminé d'intensité lumineuse est représentative du premier seuil prédéterminé d'étalement angulaire.

Ici, le module de contrôle 3 est configuré pour générer le signal de contrôle CTRL présentant la valeur d'alarme lorsque la valeur de l'intensité lumineuse est inférieure au deuxième seuil prédéterminé.

Le circuit de commande 4 est configuré pour désactiver la source lumineuse à la réception du signal de contrôle CTRL présentant la valeur d'alarme. Par exemple, le circuit de commande 4 peut être configuré pour déconnecter la source lumineuse 20 de son alimentation électrique, comme il sera vu ci-après.

La figure 2 illustre une configuration du dispositif 1 dans lequel le diffuseur 21 est défaillant, ici absent. L'étalement angulaire présente donc ici la valeur amont même au niveau de la sortie optique 22.

Le trajet d'un deuxième rayon périphérique 51 issu de la bordure du faisceau 5 présentant la valeur d'étalement angulaire amont est représenté. Le rayon est réfléchi sur les parois partiellement réfléchissantes 60 et 61 avec un angle d'incidence plus faible et subit donc un nombre plus important de réflexions, ici 19 réflexions, et donc des pertes optiques plus importantes. Ainsi, le deuxième rayon périphérique 50 atteint le photorécepteur 30 avec une intensité lumineuse inférieure au deuxième seuil prédéterminé. Le module de contrôle transmet donc le signal de contrôle CTRL présentant la valeur d'alarme au circuit de commande 4 qui désactive alors la source lumineuse 20.

Le dispositif décrit ici en lien avec les figures 1 et 2 comporte une source lumineuse comportant une matrice de diode VCSEL. Toutefois, cet exemple de réalisation de la source lumineuse n'est pas limitatif et la source lumineuse pourrait être différente. En particulier, la source lumineuse peut ne comporter qu'une seule diode. La source lumineuse peut notamment être de nature différente, par exemple comporter une ou plusieurs sources lasers qui ne soient pas de type VCSEL, tel que les diodes lasers émettant sur la tranche ( « Edge Emitting Laser Diode », en langue anglaise), les diodes lasers de type Fabry-Perot, les lasers à rétroaction répartie (laser DFB, pour « Distributed FeedBack », en langue anglaise), ou encore une ou plusieurs sources lumineuses qui ne soient pas des diodes électroluminescentes, tel que les lampes à filament, ou lampes à décharge, ou encore les tubes fluorescents.

En particulier, la source lumineuse peut être configurée pour délivrer un faisceau lumineux présentant une valeur amont différente de celle mentionnée ci-avant. Par exemple, la valeur amont de l'étalement angulaire peut être comprise entre 1° et 20°.

La valeur aval d'étalement angulaire, qui dépend de la configuration du diffuseur et de la valeur amont d'étalement angulaire, peut être comprise entre 30° et 100° .

Le dispositif décrit précédemment comporte un guide d'onde formé par une vitre de protection partiellement transparente ce qui permet avantageusement de réduire l'encombrement du dispositif. Toutefois, des variantes de réalisation non couvertes par l'invention qui comportent un guide d'onde distinct de la vitre de protection, par exemple une fibre optique, sont envisageables. En particulier, des variantes de réalisation non couvertes par l'invention du dispositif sont dépourvues de vitre de protections.

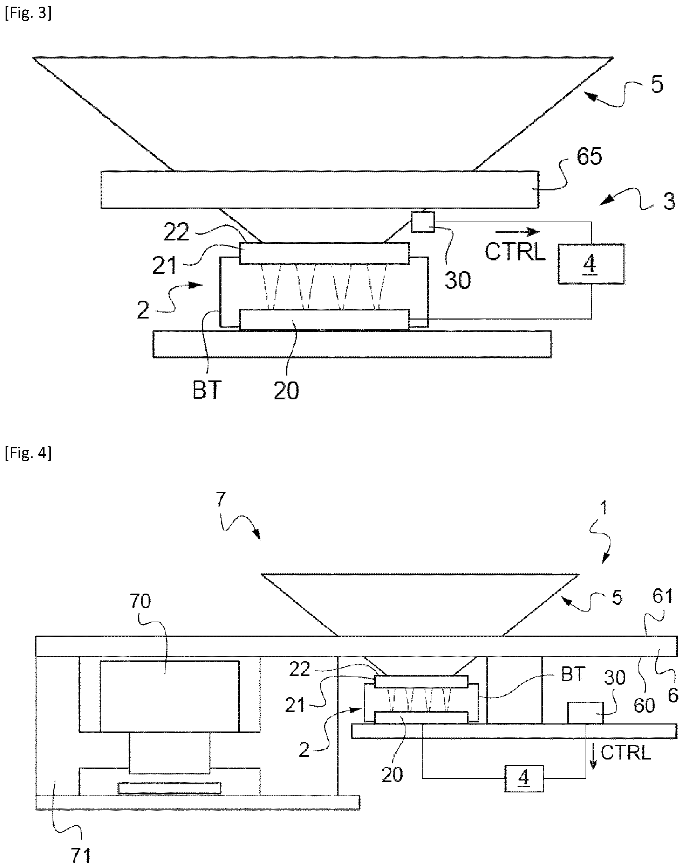

La figure 3 illustre une variante de réalisation non couverte par l'invention dans laquelle le module de contrôle 3 ne comporte pas de guide d'onde, et dans laquelle le photorécepteur 30 est directement optiquement couplé à la sortie optique 22. Ici, le photorécepteur 30 est placé en périphérie du faisceau 5.

Ainsi, en cas de diminution de l'étalement angulaire, c'est-à-dire en cas de défaillance du diffuseur 21, le photorécepteur 30 n'est plus éclairé par le faisceau 5 présentant la valeur amont de divergence et la valeur de l'intensité lumineuse qu'il reçoit passe sous le deuxième seuil. Le circuit de commande 4 désactive alors la source lumineuse.

Le dispositif selon ce mode de réalisation comporte une vitre de protection 65 ne faisant pas office de guide d'onde mais servant simplement à protéger le dispositif 1.

Un système d'imagerie selon l'invention est illustré par la figure 4 et désigné dans son ensemble par la référence 7. Le système d'imagerie 7 comporte ici un dispositif de capture d'image 70, ici une caméra maintenue par un châssis 71, et un dispositif d'illumination 1 tel que décrit précédemment en lien avec les figures 1 et 2. Le dispositif d'illumination 1 est configuré pour illuminer une scène à capturer, par exemple ici l'habitacle d'un véhicule, et la caméra 70 est configurée pour capturer la scène illuminée. Par exemple, les images capturées par la caméra 70 sont traitées par un circuit de traitement d'image (non représenté) à des fins d'assistance à la conduite.

En variante, le dispositif imageur 7 peut comprendre, en tant que dispositif d'imagerie, un système de capture d'images tridimensionnelles et le dispositif d'illumination est alors configuré pour émettre le faisceau lumineux de façon impulsionnelle, afin de capturer une image tridimensionnelle notamment par la mise en œuvre de techniques dites de mesure de temps de vol.

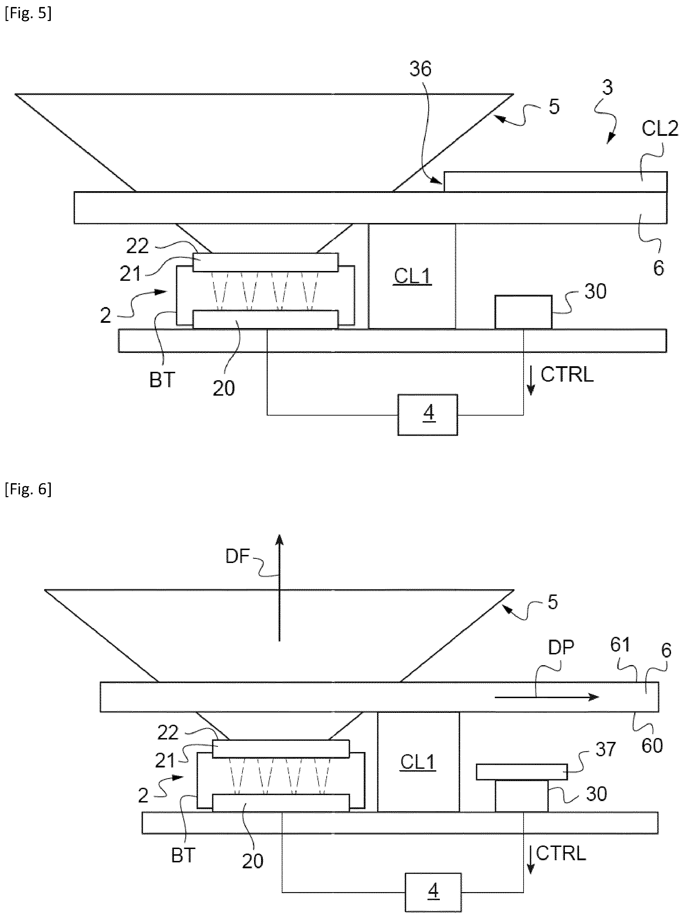

La figure 5 illustre une variante de réalisation de l'invention dans laquelle le dispositif d'illumination décrit précédemment en lien avec les figures 1 et 2 comporte en outre une deuxième cloison opaque CL2 protégeant le module de contrôle 3 de la lumière ambiante. La deuxième cloison opaque CL2 est disposée sur une portion de la vitre de protection en vis-à-vis du photorécepteur 30.

Par exemple, la première cloison opaque CL1 et la deuxième cloison opaque CL2 forme ici les parois d'un boîtier qui isole le photorécepteur 30 de la lumière ambiante et qui présente une ouverture 36 traversée par la vitre de protection, c'est-à-dire par le guide d'onde 6.

Selon une variante de réalisation illustrée par la figure 6, un filtre passe-bande 37 est interposé entre le photorécepteur 30 et la sortie optique 22. Ici, le filtre passe bande 37 est configuré pour laisser passer des rayons lumineux dont la longueur d'onde est située dans la spectre d'émission de la source lumineuse en tenant compte de toute les variations liées à cette source (tolérances de fabrication, variation de température, variation de l'angle d'incidence), et pour réfléchir ou absorber les rayons lumineux hors de cette plage de valeurs. Dans cet exemple, le filtre passe-bande 37 combiné avec la source lumineuse 20 étant ici un laser de type VCSEL est configuré pour laisser passer les rayons lumineux dans une bande de 50 nm à 20 nm autour de la longueur d'onde centrale du VCSEL. Le filtre passe-bande 37 est ici réalisé par une succession de fines couches de matériaux à indices variables sur un support en verre.

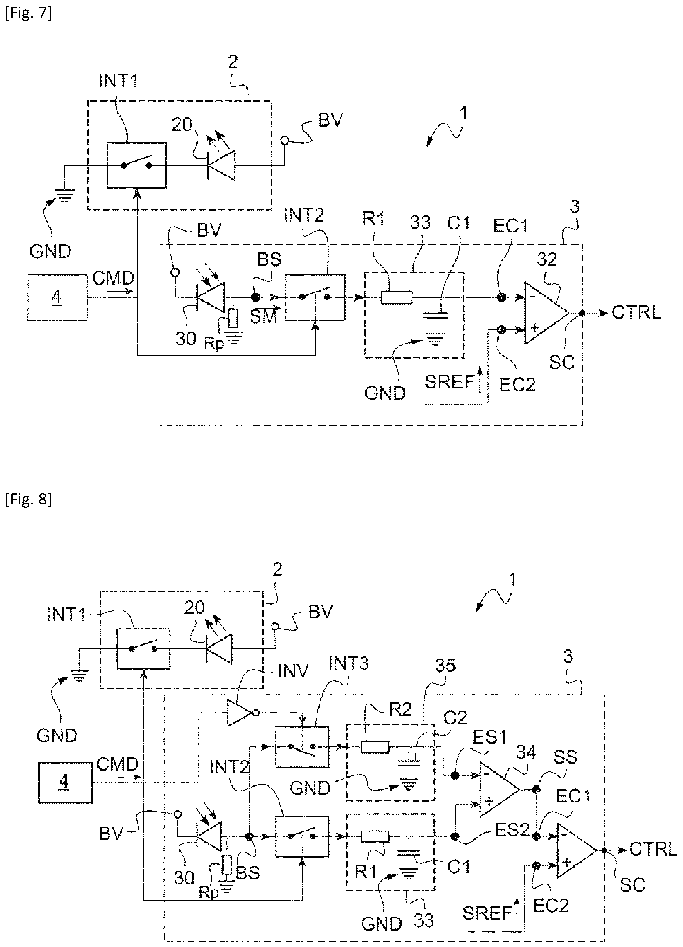

La figure 7 illustre schématiquement et d'un point de vu électrique le dispositif 1 selon l'invention, et particulièrement le module d'illumination 2, le module de contrôle 3 et le circuit de commande 4.

La source lumineuse 20 est ici représentée symboliquement par une diode électroluminescente couplée entre une borne d'alimentation BV configurée pour recevoir une tension d'alimentation, par exemple ici une tension de quelques volts, et une borne de référence GND, par exemple ici la masse.

Le photorécepteur 30 est ici représenté symboliquement par une photodiode dont la cathode est couplée à la borne d'alimentation BV et dont l'anode forme une borne de signal BS configurée pour délivrer un signal de mesure SM représentatif de l'intensité lumineuse mesurée par le photorécepteur 30. Une résistance de protection Rp est couplée entre l'anode et la cathode de la photodiode 30.

Le module de contrôle 3 comporte en outre un comparateur 32 comportant une première entrée de comparateur EC1, une deuxième entrée de comparateur EC2, et une sortie de comparateur SC configurée pour délivrer le signal de contrôle CTRL.

La borne de signal BS est ici couplée à la première entrée de comparateur EC1 par l'intermédiaire d'un premier circuit mémoire 33. Le premier circuit mémoire est ici un circuit RC comportant une première résistance R1, couplée entre la borne de signal BS et la première entrée de comparateur EC1, et un premier condensateur C1, couplé entre la première entrée de comparateur EC1 et la borne de référence GND. L'homme de l'art choisira les valeurs de la résistance R1 et de la capacité C1 de manière à former un filtre passe-bas adapté à la fréquence de modulation ou d'activation de l'illuminateur. Par exemple pour une modulation de capteur de type TOF (« Time Of Flight » en langue anglaise, « temps de vol » en langue française) à 25MHz on choisira une fréquence de coupure de 5MHz. Ceci afin d'éviter que la sortie SC du comparateur 32 ne change d'état à chaque impulsion lumineuse.

La deuxième entrée de comparateur est configurée pour recevoir un signal de référence SRF représentatif de la valeur du deuxième seuil prédéterminé et le comparateur 32 est configuré pour délivrer le signal de contrôle CTRL présentant la valeur neutre lorsque la valeur du signal sur la première entrée de comparateur EC1 est supérieure à la valeur du signal de référence SRF, et pour délivrer le signal de contrôle CTRL présentant la valeur d'alarme lorsque la valeur du signal sur la première entrée de comparateur EC1 est inférieure ou égale à la valeur du signal de référence SRF.

Le circuit de commande 4 est configuré pour générer un signal de commande CMD présentant soit un premier état, ici un état haut (par exemple quelques volts), soit un deuxième état, par exemple ici un état bas correspondant à une valeur de 0 volt.

La source lumineuse 20 est couplée à la borne de référence GND par l'intermédiaire d'un premier interrupteur INT1 commandé en tension par le signal de commande CMD. Le premier interrupteur INT1 est configuré pour être fermé lorsque le signal de commande CMD présente le premier état et ouvert lorsque le signal de commande CMD présente le deuxième état. Ainsi, l'alimentation électrique de la source lumineuse 20 et donc l'émission du faisceau lumineux 5 sont commandés par le signal de commande CMD.

La borne de signal BS est couplée au premier circuit mémoire 33 par l'intermédiaire d'un deuxième interrupteur INT2 commandé en tension et configuré pour être fermé lorsque le signal de commande CMD présente le premier état et ouvert lorsque le signal de commande présente le deuxième état. Ainsi le circuit de commande 4 est configuré pour désactiver la photo-détection lorsque la source lumineuse 20 n'émet pas le faisceau lumineux 5.

Dans le mode de réalisation illustré, le signal de commande CMD est un signal impulsionnel, par exemple présentant un rapport cyclique égal à 50%. Le faisceau lumineux 5 est donc émis de façon impulsionnelle et le dispositif d'illumination 1 convient tout particulièrement à la capture d'image par la mise en œuvre de méthode de temps de vol.

Et, le circuit mémoire 33 est configuré pour maintenir la valeur du signal de mesure SM entre deux présentations successives de l'état haut du signal de commande CMD. Dans cet exemple, la constante de temps du premier circuit RC du premier circuit mémoire 33 est égale à au moins 5 fois la période du signal impulsionnel de commande CMD et le maintien de la valeur du signal de mesure SM est assurée avec une tolérance inférieure à 1%.

Le circuit de commande 4 est configuré pour délivrer le signal de commande CMD présentant le deuxième état de façon continue lorsque le signal de contrôle présente la valeur d'alarme.

La figure 8 illustre une variante de réalisation du dispositif tel que décrit précédemment en lien avec la figure 7, dans lequel le module de contrôle comporte en outre un soustracteur 34 et un deuxième circuit mémoire 35.

Le soustracteur comporte une première entrée de soustracteur ES1, une deuxième entrée de soustracteur ES2 et une sortie de soustracteur SS configurée pour délivrer un signal différentiel dont la valeur est égale à la différence de la valeur du signal sur la première entrée de soustracteur ES1 et la valeur du signal sur la deuxième entrée de soustracteur ES2.

La première entrée de soustracteur ES1 est couplée à la borne de signal BS par l'intermédiaire du deuxième circuit mémoire 35. Le deuxième circuit mémoire 35 comporte un deuxième circuit RC dont une deuxième résistance R2 est couplée entre la borne de signal BS et la première entrée de soustracteur ES1 et dont un deuxième condensateur C2, est couplé entre la première entrée de soustracteur ES1 et la borne de référence GND. L'homme de l'art choisira les valeurs de de la résistance R2 et de la capacité C2 de telle manière à former un filtre passe bas par rapport à la fréquence de modulation ou d'activation de l'illuminateur de la même manière que pour la résistance R1 et le condensateur C1. Par exemple pour une modulation de capteur de type TOF à 25MHz on choisira une fréquence de coupure de 5MHz.

La borne de signal BS est couplée au deuxième circuit mémoire 35 par l'intermédiaire d'un troisième interrupteur INT3 commandé en tension configuré pour être ouvert lorsque le signal de commande CMD présente le premier état et fermé lorsque le signal de commande CMD présente le deuxième état. Par exemple ici, le troisième interrupteur INT3 est configuré pour recevoir le signal de commande par l'intermédiaire d'une porte inverseuse INV.

Ainsi la sortie de soustracteur SS est configurée pour délivrer à la première entrée de comparateur un signal différentiel dont la valeur est égale à la différence entre la valeur du signal de mesure lorsque le signal impulsionnel de commande présente le premier état et la valeur du signal de mesure lorsque le signal impulsionnel de commande présente le deuxième état, c'est-à-dire un signal dans lequel la composante représentative de la lumière ambiante a été éliminée.

Diverses autres modifications peuvent être apportées à l'invention dans le cadre des revendications annexées. Par exemple, bien que les modes de réalisations des figures 7 et 8 soient illustrés par des circuits analogiques, l'invention est parfaitement compatible avec des technologies numériques, par exemple impliquant des circuits électroniques intégrés.

## Revendications

1. Dispositif d'illumination comportant un module d'illumination (2) comprenant une sortie optique (22) configurée pour émettre un faisceau lumineux (5) présentant un étalement angulaire, le module (2) comprenant une source lumineuse (20) et un diffuseur optique (21), la source lumineuse (20) étant configurée pour générer ledit faisceau lumineux (5), le diffuseur optique (21) étant agencé pour recevoir le faisceau lumineux (5) et pour le diffuser vers la sortie optique (22) de façon que l'étalement angulaire présente, en aval du diffuseur (21) par rapport au sens de propagation du faisceau lumineux (5), une valeur aval (θ₂) supérieure à une valeur amont (θ₁) de l'étalement angulaire en amont du diffuseur,
le dispositif (1) comportant un module de contrôle (3) configuré pour émettre un signal de contrôle (CTRL) présentant une valeur d'alarme lorsque la valeur de l'étalement angulaire du faisceau lumineux émis par la sortie optique (22) passe sous un premier seuil prédéterminé, le module de contrôle comprenant un photorécepteur (30) optiquement couplé à la sortie optique (22) et configuré pour mesurer une intensité lumineuse , le module de contrôle étant configuré pour délivrer le signal de contrôle (CTRL) présentant la valeur d'alarme lorsque la valeur de l'intensité lumineuse est inférieure ou égale à un deuxième seuil prédéterminé, le dispositif (1) comportant en outre un circuit de commande (4) configuré pour désactiver la source lumineuse à la réception du signal de contrôle (CTRL) présentant la valeur d'alarme, le module de contrôle (3) comportant un guide d'onde (6) qui présente une direction de propagation (DP) transversale au faisceau (5) et qui est configuré pour coupler optiquement la sortie optique (22) et le photorécepteur (30),
le dispositif étant **caractérisé en ce qu'**il comporte une vitre de protection configurée pour être traversée par le faisceau lumineux, le guide d'onde (6) comportant au moins une portion de la vitre de protection.

2. Dispositif selon la revendication 1, dans lequel le circuit de commande (4) est configuré pour délivrer un signal impulsionnel de commande (CMD) présentant soit un premier état, soit un deuxième état, la source lumineuse (20) étant configurée pour générer le faisceau lumineux (5) lorsque le signal impulsionnel de commande (CMD) présente le premier état et pour être désactivée lorsque le signal impulsionnel de commande présente le deuxième état.

3. Dispositif selon la revendication 2, dans lequel le photorécepteur (30) comporte une borne de signal (BS) configurée pour délivrer un signal de mesure (SM) représentatif de l'intensité lumineuse, le module de contrôle (3) comportant un comparateur (32) comprenant une première entrée de comparateur (EC1) électriquement couplée à la borne de signal (BS), une deuxième entrée de comparateur (EC2) configurée pour recevoir un signal de référence (SRF) dont la valeur est représentative du deuxième seuil et une sortie de comparateur (SC) configurée pour délivrer le signal de contrôle (CTRL) présentant la valeur d'alarme si la valeur du signal sur la première entrée de comparateur (EC1) est inférieure ou égale à la valeur du signal sur la deuxième entrée de comparateur (EC2).

4. Dispositif selon la revendication 3, dans lequel la borne de signal (BS) est couplée à la première entrée de comparateur (EC1) par l'intermédiaire d'un circuit mémoire (33) configuré pour maintenir la valeur du signal de mesure (SM) entre deux présentations successives du premier état du signal impulsionnel de commande (CMD).

5. Dispositif selon la revendication 3 ou 4, dans lequel la borne de signal (BS) est couplée à la première entrée de comparateur (EC1) par l'intermédiaire d'un soustracteur configuré pour délivrer à la première entrée de comparateur (EC1) un signal différentiel dont la valeur est égale à la différence entre la valeur du signal de mesure (SM) lorsque le signal impulsionnel de commande (CMD) présente le premier état et la valeur du signal de mesure (SM) lorsque le signal impulsionnel de commande (CMD) présente le deuxième état.

6. Dispositif selon l'une quelconque des revendications précédentes, dans lequel un filtre optique passe-bande (37) est interposé entre le photorécepteur (30) et la sortie optique (22).

7. Dispositif selon l'une quelconque des revendications précédentes, dans lequel le module de contrôle (3) comporte au moins une cloison opaque d'isolation (CL1, CL2) le protégeant de la lumière ambiante.

8. Dispositif selon l'une quelconque des revendications précédentes, dans lequel la source lumineuse (20) comporte au moins une diode laser à cavité verticale émettant par la surface.

9. Système d'imagerie comportant un dispositif de capture d'image (70) et un dispositif d'illumination (1) selon l'une quelconque des revendications 1 à 8.

## Patentansprüche

1. Beleuchtungsvorrichtung, die ein Beleuchtungsmodul (2) beinhaltet, das einen optischen Ausgang (22) umfasst, der dazu ausgestaltet ist, einen Lichtstrahl (5) zu emittieren, der eine Winkelspreizung aufweist, wobei das Modul (2) eine Lichtquelle (20) und eine optische Streueinrichtung (21) umfasst, wobei die Lichtquelle (20) dazu ausgestaltet ist, den Lichtstrahl (5) zu erzeugen, wobei die optische Streueinrichtung (21) dazu ausgebildet ist, den Lichtstrahl (5) zu empfangen und ihn zu dem optischen Ausgang (22) hin zu streuen, so dass die Winkelspreizung stromab der Streueinrichtung (21) in Bezug auf den Ausbreitungsrichtungssinn des Lichtstrahls (5) einen stromabwärtigen Wert (θ₂) aufweist, der größer als ein stromaufwärtiger Wert (θ₁) der Winkelspreizung stromauf der Streueinrichtung ist,
wobei die Vorrichtung (1) ein Steuerungsmodul (3) beinhaltet, dass dazu ausgestaltet ist, ein Steuerungssignal (CTRL) zu emittieren, das einen Alarmwert aufweist, wenn der Wert der Winkelspreizung des von dem optischen Ausgang (22) emittierten Lichtstrahls einen ersten vorbestimmten Schwellenwert unterschreitet, wobei das Steuerungsmodul einen Photoempfänger (30) umfasst, der mit dem optischen Ausgang (22) optisch gekoppelt ist und dazu ausgestaltet ist, eine Lichtintensität zu messen, wobei das Steuerungsmodul dazu ausgestaltet ist, das den Alarmwert aufweisende Steuerungssignal (CTRL) auszugeben, wenn der Wert der Lichtintensität kleiner als oder gleich einem zweiten vorbestimmten Schwellenwert ist, wobei die Vorrichtung (1) ferner einen Schaltkreis (4) beinhaltet, der dazu ausgestaltet ist, die Lichtquelle beim Empfangen des den Alarmwert aufweisenden Steuerungssignals (CTRL) zu deaktivieren, wobei das Steuerungsmodul (3) einen Wellenleiter (6) beinhaltet, der eine quer zu dem Strahl (5) verlaufende Ausbreitungsrichtung (DP) aufweist und der dazu ausgestaltet ist, den optischen Ausgang (22) und den Photoempfänger (30) optisch zu koppeln,
wobei die Vorrichtung **dadurch gekennzeichnet ist, dass** sie eine Schutzscheibe beinhaltet, die dazu ausgestaltet ist, von dem Lichtstrahl durchquert zu werden, wobei der Wellenleiter (6) mindestens einen Abschnitt der Schutzscheibe beinhaltet.

2. Vorrichtung nach Anspruch 1, wobei der Schaltkreis (4) dazu ausgestaltet ist, ein impulsförmiges Schaltsignal (CMD) auszugeben, das entweder einen ersten Zustand oder einen zweiten Zustand aufweist, und wobei die Lichtquelle (20) dazu ausgestaltet ist, den Lichtstrahl (5) zu erzeugen, wenn das impulsförmige Schaltsignal (CMD) den ersten Zustand aufweist, und deaktiviert zu werden, wenn das impulsförmige Schaltsignal den zweiten Zustand aufweist.

3. Vorrichtung nach Anspruch 2, wobei der Photoempfänger (30) eine Signalklemme (BS) beinhaltet, die dazu ausgestaltet ist, ein für die Lichtintensität repräsentatives Messsignal (SM) auszugeben, wobei das Steuerungsmodul (3) einen Komparator (32) beinhaltet, umfassend einen ersten Komparatoreingang (EC1), der mit der Signalklemme (BS) elektrisch gekoppelt ist, einen zweiten Komparatoreingang (EC2), der dazu ausgestaltet ist, ein Referenzsignal (SRF) zu empfangen, dessen Wert für den zweiten Schwellenwert repräsentativ ist, und einen Komparatorausgang (SC), der dazu ausgestaltet ist, das den Alarmwert aufweisende Steuerungssignal (CTRL) auszugeben, wenn der Wert des Signals an dem ersten Komparatoreingang (EC1) kleiner als oder gleich dem Wert des Signals an dem zweiten Komparatoreingang (EC2) ist.

4. Vorrichtung nach Anspruch 3, wobei die Signalklemme (BS) mit dem ersten Komparatoreingang (EC1) über eine Speicherschaltung (33) gekoppelt ist, die dazu ausgestaltet ist, den Wert des Messsignals (SM) zwischen zwei aufeinander folgenden Anzeigen des ersten Zustands des impulsförmigen Schaltsignals (CMD) zu halten.

5. Vorrichtung nach Anspruch 3 oder 4, wobei die Signalklemme (BS) mit dem ersten Komparatoreingang (EC1) über einen Subtrahierer gekoppelt ist, der dazu ausgestaltet ist, an den ersten Komparatoreingang (EC1) ein Differenzialsignal auszugeben, dessen Wert gleich der Differenz zwischen dem Wert des Messsignals (SM), wenn das impulsförmige Schaltsignal (CMD) den ersten Zustand aufweist, und dem Wert des Messsignals (SM), wenn das impulsförmige Schaltsignal (CMD) den zweiten Zustand aufweist, ist.

6. Vorrichtung nach einem der vorhergehenden Ansprüche, wobei ein optischer Bandpassfilter (37) zwischen den Photoempfänger (30) und den optischen Ausgang (22) gesetzt ist.

7. Vorrichtung nach einem der vorhergehenden Ansprüche, wobei das Steuerungsmodul (3) mindestens eine opake Isolationstrennwand (CL1, CL2) beinhaltet, die es vor dem Umgebungslicht schützt.

8. Vorrichtung nach einem der vorhergehenden Ansprüche, wobei die Lichtquelle (20) mindestens eine oberflächenemittierende Laserdiode mit senkrechtem Resonator beinhaltet.

9. Abbildungssystem, das eine Bilderfassungsvorrichtung (70) und eine Beleuchtungsvorrichtung (1) nach einem der Ansprüche 1 bis 8 umfasst.

## Claims

1. Lighting device comprising a lighting module (2) comprising an optical output (22) configured to emit a light beam (5) having an angular spread, the module (2) comprising a light source (20) and an optical diffuser (21), the light source (20) being configured to generate said light beam (5), the optical diffuser (21) being arranged to receive the light beam (5) and to diffuse it toward the optical output (22) so that the angular spread has, downstream of the diffuser (21) relative to the direction of propagation of the light beam (5), a downstream value (θ₂) that is greater than an upstream value (θ₁) of the angular spread upstream of the diffuser, the device (1) comprising a control module (3) configured to transmit a control signal (CTRL) having an alarm value when the value of the angular spread of the light beam emitted by the optical output (22) falls below a first predetermined threshold, the control module comprising a photoreceptor (30) optically coupled to the optical output (22) and configured to measure a light intensity, the control module being configured to deliver the control signal (CTRL) having the alarm value when the value of the light intensity is less than or equal to a second predetermined threshold, the device (1) further comprising a control circuit (4) configured to deactivate the light source upon receiving the control signal (CTRL) having the alarm value, the control module (3) comprising a waveguide (6) that has a direction of propagation (DP) transverse to the beam (5) and that is configured to optically couple the optical output (22) and the photoreceptor (30),
the device being **characterized in that** it comprises a protective window configured to be traversed by the light beam, the waveguide (6) comprising at least one portion of the protective window.

2. Device according to Claim 1, wherein the control circuit (4) is configured to deliver a control pulse signal (CMD) having either a first state or a second state, with the light source (20) being configured to generate the light beam (5) when the control pulse signal (CMD) assumes the first state and to be deactivated when the control pulse signal assumes the second state.

3. Device according to Claim 2, wherein the photoreceptor (30) comprises a signal terminal (BS) configured to deliver a measurement signal (SM) representing the light intensity, the control module (3) comprising a comparator (32) comprising a first comparator input (EC1) electrically coupled to the signal terminal (BS), a second comparator input (EC2) configured to receive a reference signal (SRF), the value of which represents the second threshold and a comparator output (SC) configured to deliver the control signal (CTRL) having the alarm value if the value of the signal on the first comparator input (EC1) is less than or equal to the value of the signal on the second comparator input (EC2).

4. Device according to Claim 3, wherein the signal terminal (BS) is coupled to the first comparator input (EC1) by means of a memory circuit (33) configured to maintain the value of the measurement signal (SM) between two successive presentations of the first state of the control pulse signal (CMD).

5. Device according to Claim 3 or 4, wherein the signal terminal (BS) is coupled to the first comparator input (EC1) by means of a subtractor configured to deliver a differential signal to the first comparator input (EC1), with the value of the differential signal being equal to the difference between the value of the measurement signal (SM) when the control pulse signal (CMD) assumes the first state and the value of the measurement signal (SM) when the control pulse signal (CMD) assumes the second state.

6. Device according to any one of the preceding claims, wherein an optical bandpass filter (37) is interposed between the photoreceptor (30) and the optical output (22).

7. Device according to any one of the preceding claims, wherein the control module (3) comprises at least one opaque isolating partition (CL1, CL2) protecting it from ambient light.

8. Device according to any one of the preceding claims, wherein the light source (20) comprises at least one vertical cavity surface emitting laser diode.

9. Imaging system comprising an image capture device (70) and a lighting device (1) according to any one of Claims 1 to 8.
